# EUROPEAN PATENT SPECIFICATION

(11) **EP 4 035 551 B1**
(45) Date of publication and mention of the grant of the patent: **04.10.2023**
(21) Application number: 22153175.9
(22) Date of filing: 25.01.2022
(51) Int. Cl.: A43B 1/028, A43B 1/05, A43B 23/02, A43D 1/02, A43D 3/02

(54) **DESIGN SUPPORT APPARATUS, DESIGN METHOD AND UPPER PRODUCING SYSTEM**
DESIGNUNTERSTÜTZUNGSVORRICHTUNG, DESIGNVERFAHREN OBERSCHUHHERSTELLUNGSSYSTEM
APPAREIL DE SUPPORT DE CONCEPTION, PROCÉDÉ DE CONCEPTION ET SYSTÈME DE PRODUCTION SUPÉRIEUR

(30) Priority: 29.01.2021 JP 2021013293
(43) Date of publication of application: 03.08.2022
(73) Proprietor: ASICS Corporation, Kobe-shi Hyogo 650-8555 (JP)
(72) Inventor: KOZUKA, Yuya, Hyogo, 650-8555 (JP); WAKASUGI, Shinsaku, Hyogo, 650-8555 (JP); ABE, Satoru, Hyogo, 650-8555 (JP); TANIGUCHI, Norihiko, Hyogo, 650-8555 (JP); TAKAHAMA, Kenta, Hyogo, 650-8555 (JP); HATANO, Genki, Hyogo, 650-8555 (JP); TAKASHIMA, Shingo, Hyogo, 650-8555 (JP); SAKAGUCHI, Masanori, Hyogo, 650-8555 (JP)
(74) Representative: Marks & Clerk LLP

(56) References cited:
- WO-A1-02/40941
- JP-A- 2022 043 406
- US-A1- 2017 066 212

## Description

### BACKGROUND OF THE INVENTION

### Field of the Invention

The present disclosure relates to a design support apparatus, a design method and an upper producing system.

### Description of the Background Art

When a shoe is manufactured, a cloth that forms an upper is overlaid on a shoe last, to thereby form the upper that conforms to the shape of the shoe last. For example, U.S. Patent Application Publication No. 2018/125165 discloses thermoforming a cloth that forms an upper, to thereby form the upper that conforms to a shape of a shoe last. JP 2022 043406 A describes a data generation device that includes an input section for receiving foot type data, a processor for calculating shoe type data from the foot type data received by the input section, and an output section for outputting the shoe type data calculated by the processor.

### SUMMARY OF THE INVENTION

An upper needs to have a three-dimensional shape such that the upper conforms to a shape of a shoe last. Therefore, the upper having a three-dimensional shape is produced by cutting a plurality of parts from a planar sheet such as a cloth and sewing the plurality of parts or combining the plurality of parts using an adhesive. However, if a cutting pattern of the plurality of parts is designed simply based on the shape of the shoe last, a portion that does not sufficiently conform to the shape of the shoe last may occur when the upper is overlaid on the shoe last and thermoforming is performed.

The invention is defined by the subject-matter of the independent claims 1, 10 and 11. Preferred embodiments are subject-matter of the dependent claims 2-9, respectively.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic view showing a configuration example of an upper producing system according to an embodiment.
Fig. 2 is a schematic view showing a hardware configuration example of a design support apparatus according to the embodiment.
Fig. 3 is a flowchart for illustrating a process performed by the design support apparatus according to the embodiment to design a cutting pattern of a sheet.
Fig. 4 is a schematic view for illustrating transition from shoe last data to a cutting pattern of a sheet.
Fig. 5A shows shrinkage directions when thermoforming is performed in a three-dimensional shape of an upper.
Fig. 5B is a schematic view showing one example of taking the shrinkage directions of the sheet into consideration.
Fig. 5C is a schematic view showing one example of taking a shrinkage coefficient of the sheet into consideration.
Fig. 6 is a plan view showing one example of an amount of correction of the cutting pattern of the sheet.
Fig. 7A is a side view of the upper showing one example of an amount of correction in consideration of a thickness of the sheet.
Fig. 7B is a plan view of the upper showing one example of the amount of correction in consideration of the thickness of the sheet.
Fig. 8A is a plan view showing a cutting pattern of a bottom surface portion.
Fig. 8B is a diagram of a cutting pattern showing one example of an amount of correction in consideration of an outer perimeter length of the bottom surface portion of the upper.
Fig. 9 is a schematic view showing one example of a heat-shrinkable sheet in which a first layer made of woven fabric is sandwiched between second and third layers made of nonwoven fabric.
Fig. 10A is a perspective view schematically showing a configuration of threads made of a core sheath material.
Fig. 10B shows an initial state of woven fabric.
Fig. 10C schematically shows a state in which wefts have shrunk.
Fig. 10D schematically shows a state in which warps and wefts have been welded to each other.
Fig. 11A shows an overview of needle punching.
Fig. 11B is a plan view showing a fiber sheet including a needle-punched portion, and a gap forming portion that is not subjected to needle punching.
Fig. 12 is a schematic view showing another example of a heat-shrinkable sheet in which a base sheet made of woven fabric is sandwiched between an aggregate of a plurality of chip members made of nonwoven fabric and one sheet of nonwoven fabric.
Fig. 13 shows an overview of needle punching.
Fig. 14 is a cross-sectional view showing still another example of a heat-shrinkable sheet having a layer structure.
Fig. 15 is a plan view showing one example of a double Russell cloth.
Fig. 16 is a partially enlarged cross-sectional view of one example of the double Russell cloth.

### DESCRIPTION OF THE PREFERRED EMBODIMENTS

An embodiment will be described hereinafter with reference to the drawings.

In the following description, the same components are denoted by the same reference characters. Their names and functions are also the same. Therefore, a detailed description about them will not be repeated.

### <Embodiment>

In an embodiment, an example of application of the present disclosure will be described. First, in the embodiment, when manufacturing a custom-made shoe tailored to a foot of a user at, for example, a store, shoe last data is generated based on foot shape data obtained by measuring a foot shape using a measuring apparatus. Furthermore, in the embodiment, an upper producing system will be described, which calculates a cutting pattern of a sheet for producing an upper of the shoe, based on the generated shoe last data, and cuts the sheet using a cutting apparatus based on the cutting pattern.

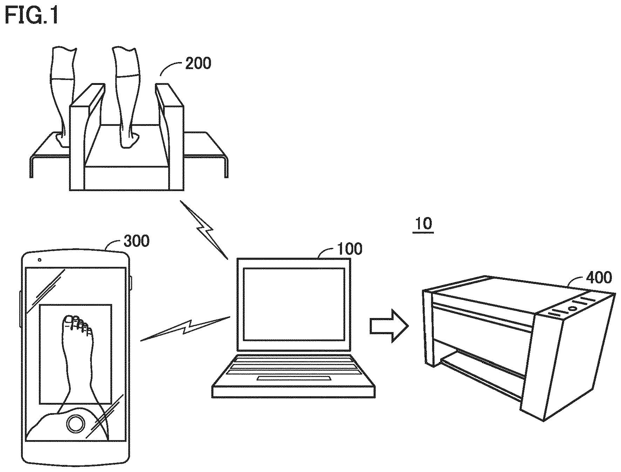

Fig. 1 is a schematic view showing a configuration example of an upper producing system 10 according to the embodiment. Referring to Fig. 1, the upper producing system 10 includes a design support apparatus 100, a measuring apparatus 200 that measures a foot shape, and a cutting apparatus 400 that cuts a sheet based on a cutting pattern. Although the upper producing system 10 shown in Fig. 1 includes the measuring apparatus 200, the upper producing system 10 may use prestored shoe last data without including the measuring apparatus 200. In addition, depending on stores, or at a remote location such as a user's house, the foot shape may be measured using a mobile terminal 300 such as a smartphone, instead of the measuring apparatus 200. Furthermore, the design support apparatus 100 can communicate with a not-shown data server placed inside or outside a store.

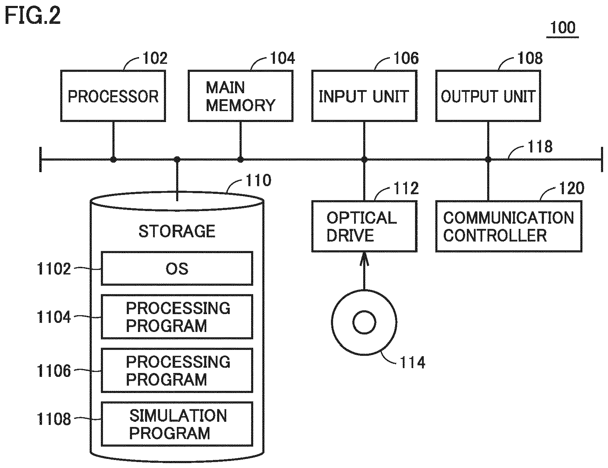

The design support apparatus 100 generates shoe last data based on foot shape data obtained from the measuring apparatus 200 or the mobile terminal 300, and further, calculates a cutting pattern of a sheet based on the shoe last data. Fig. 2 is a schematic view showing a hardware configuration example of the design support apparatus 100 according to the embodiment. Referring to Fig. 2, the design support apparatus 100 includes a processor 102, a main memory 104, an input unit 106, an output unit 108, a storage 110, an optical drive 112, and a communication controller 120. These components are connected through a processor bus 118.

The processor 102 is implemented by a CPU, a GPU or the like, and can read programs (by way of example, an OS 1102 and a processing program 1104) stored in the storage 110 and deploy the programs in the main memory 104 for execution. The processor 102 executes various programs read from the storage 110. Specifically, the processing program 1104 computes the shoe last data from the foot shape data and additional information received by the input unit 106, based on a prescribed algorithm. Using a prescribed algorithm, a processing program 1106 calculates the cutting pattern of the sheet based on the shoe last data. A simulation program 1108 is used in the processing program 1106, and simulates a shrinkage direction and a shrinkage coefficient of the sheet and calculates an amount of correction to a shape pattern. The processor 102 that executes the programs corresponds to a computing unit of the design support apparatus 100.

The main memory 104 is implemented by, for example, a volatile storage device such as a DRAM or an SRAM. The storage 110 is implemented by, for example, a non-volatile storage device such as an HDD or an SSD.

In addition to the OS 1102 for implementing a basic function, the processing programs 1104 and 1106 and the simulation program 1108 for providing a function as the design support apparatus 100 is stored in the storage 110.

The input unit 106 includes an input interface connected to the measuring apparatus 200 or the mobile terminal 300 to receive the foot shape data from the measuring apparatus 200 or the mobile terminal 300. The input unit 106 is implemented by a keyboard, a mouse, a microphone, a touch device or the like, and can further receive the information selected by the user.

The output unit 108 includes an output interface that outputs the cutting pattern of the sheet calculated by the processor 102 to the cutting apparatus 400. The output unit 108 is implemented by a display, various indicators, a printer or the like, and outputs a processing result or the like from the processor 102.

The communication controller 120 exchanges data with another control device or the like by using wired or wireless communication. The design support apparatus 100 may exchange the foot shape data and the additional information with the measuring apparatus 200 or the mobile terminal 300 through the communication controller 120, and may exchange the cutting pattern with the cutting apparatus 400 through the communication controller 120. In addition to the communication controller 120, a USB controller connected to the processor bus 118 may be provided to exchange the data with another control device or the like through USB connection.

The design support apparatus 100 includes the optical drive 112 that may read a computer-readable program stored in a recording medium 114 (e.g., optical recording medium such as a digital versatile disc (DVD)) in a non-transitory manner, and install the program in the storage 110 or the like.

Although the processing program 1104 and the like executed in the design support apparatus 100 may be installed through computer-readable recording medium 114, the processing program 1104 and the like may be installed by being downloaded from a server device or the like on a network. In addition, the functions provided by the design support apparatus 100 according to the embodiment may be implemented by using a part of a module provided by the OS.

Although Fig. 2 shows the configuration example in which the processor 102 executes the programs to thereby provide the functions required as the design support apparatus 100, a part or all of these provided functions may be implemented by using a dedicated hardware circuit (such as, for example, an ASIC or an FPGA). The configuration of the design support apparatus 100 shown in Fig. 2 is illustrative and the present disclosure is not limited to this configuration.

The measuring apparatus 200 is implemented by a three-dimensional foot shape scanner using laser measurement. A laser measurement apparatus that is built into walls provided on both sides of a foot put on a top board measures the foot while moving from a toe to a heel of the foot, thereby obtaining three-dimensional foot shape data of the user. A measurement method or the like of the measuring apparatus 200 is not particularly limited, as long as it can measure the three-dimensional foot shape data. The mobile terminal 300 such as a smartphone may also be used to capture an image of the foot of the user and obtain image data of the foot, and the foot shape data may be generated from the obtained image data of the foot through preliminarily installed software.

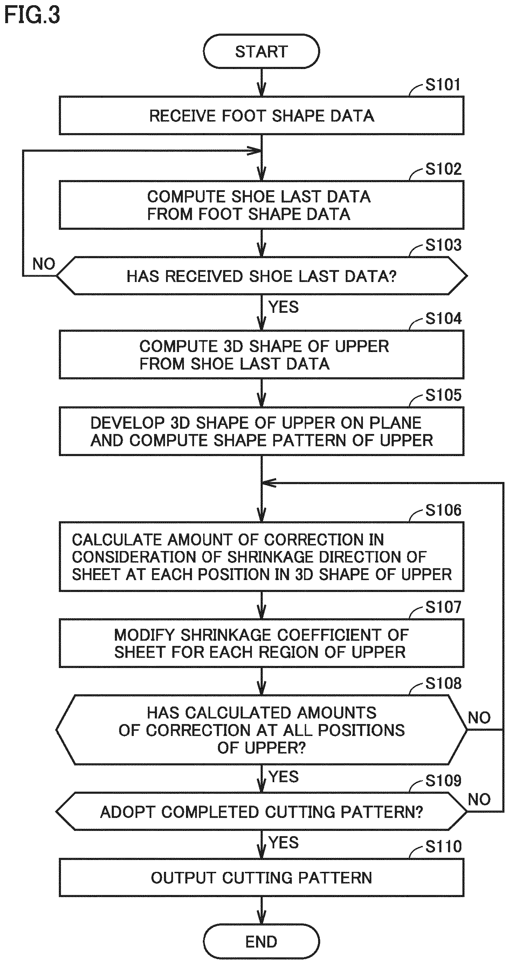

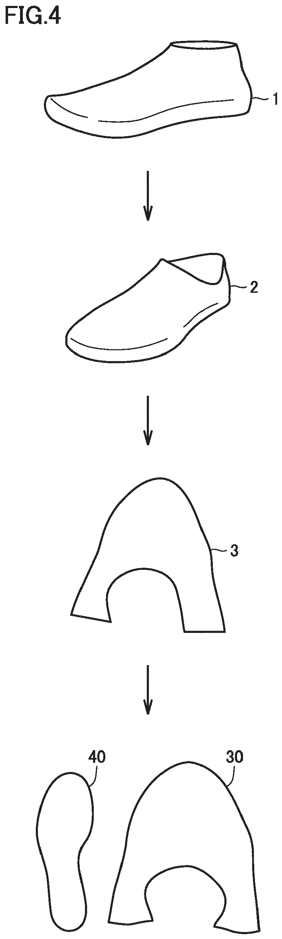

Fig. 3 is a flowchart for illustrating a process performed by the design support apparatus according to the embodiment to design a cutting pattern of a sheet. First, the design support apparatus 100 receives foot shape data measured using the measuring apparatus 200 or the mobile terminal 300 (step S101). The design support apparatus 100 computes shoe last data from the foot shape data (step S102). Fig. 4 is a schematic view for illustrating transition from shoe last data to a cutting pattern of a sheet. The design support apparatus 100 computes shoe last data 1 shown in Fig. 4 from the foot shape data.

Referring again to Fig. 3, the design support apparatus 100 determines whether or not the design support apparatus 100 has received the shoe last data 1 (step S103). In the case of a custom-made shoe, the design support apparatus 100 receives the shoe last data 1 computed from the measured foot shape data. However, the design support apparatus 100 may receive existing shoe last data. When the design support apparatus 100 has not received the shoe last data 1 (NO in step S 103), the design support apparatus 100 returns the process to step S 102 because computation of the shoe last data 1 has not ended or the existing shoe last data has not been received.

When the design support apparatus 100 has received the shoe last data 1 (YES in step S 103), the design support apparatus 100 computes three-dimensional (3D) shape data of an upper from the shoe last data (step S 104). Specifically, the design support apparatus 100 computes the three-dimensional shape data by specifying a three-dimensional shape of the upper based on information about a model of the shoe to be manufactured, and adjusting a size of the specified three-dimensional shape of the upper so as to conform to an outer surface of the shoe last data 1. The result of computation from the shoe last data 1 corresponds to three-dimensional shape data 2 of the upper shown in Fig. 4. The design support apparatus 100 may generate a shape of a wearing opening of the upper based on user's selective information (such as, for example, no poor shoe fit, or the shoe is hard to come off), and apply the shape of the wearing opening of the upper to the three-dimensional shape data 2 of the upper.

The design support apparatus 100 develops the three-dimensional shape data 2 of the upper on a plane and computes a shape pattern of the upper (step S105). As shown in Fig. 4, the shape pattern of the upper corresponds to a shape pattern 3 obtained simply by developing, on a plane, the three-dimensional shape data 2 that conforms to a dimension of the shoe last data 1, using an existing algorithm. The upper having a three-dimensional shape is produced by cutting a plurality of parts from a planar sheet such as a cloth and sewing the plurality of parts or combining the plurality of parts using an adhesive. A knit material, a mesh material, artificial leather, nonwoven fabric, a heat-shrinkable material or the like is, for example, used as a material of the upper.

Particularly when the upper is produced using the heat-shrinkable material, the upper having a three-dimensional shape is produced by cutting a plurality of parts from a heat-shrinkable sheet and sewing the plurality of parts or combining the plurality of parts using an adhesive. However, if the heat-shrinkable sheet is cut simply in accordance with the shape pattern 3 of the upper computed based on the shape of the shoe last data 1, a portion that does not sufficiently conform to the shoe last may occur when the upper having a three-dimensional shape is overlaid on the shoe last and thermoforming is performed.

Accordingly, the design support apparatus 100 according to the present embodiment uses the simulation program 1108 to calculate an amount of correction in consideration of a shrinkage direction and a shrinkage coefficient of the sheet. Furthermore, the design support apparatus 100 calculates a cutting pattern 30 of the sheet shown in Fig. 4, by developing, on a plane, the three-dimensional shape data 2 that conforms to a dimension of the shoe last data 1, to thereby obtain the shape pattern 3 of the upper, and incorporating the calculated amount of correction into the shape pattern 3 of the upper. In addition to the cutting pattern 30 of a main body portion located on the upper side of the upper, Fig. 4 also shows a cutting pattern 40 of a bottom surface portion continuous to a lower end of the main body portion.

As a method for calculating the amount of correction in consideration of the shrinkage direction and the shrinkage coefficient of the sheet, the design support apparatus 100 uses the simulation program 1108 to simulate a shrinkage direction and a shrinkage coefficient when the sheet cut in accordance with the shape pattern 3 of the upper is thermoformed, and calculates the amount of correction, for example. A shrinkage direction and a shrinkage coefficient of the heat-shrinkable material is preliminarily input to the simulation program 1108, and the design support apparatus 100 calculates the amount of correction in consideration of a shrinkage direction at each position in the three-dimensional shape of the upper and a shrinkage coefficient for each region of the upper. As a matter of course, the design support apparatus 100 may determine the amount of correction uniformly based on the shrinkage direction and the shrinkage coefficient of the sheet, regardless of each position in the three-dimensional shape of the upper. The design support apparatus 100 may be configured such that the input unit 106 receives verification data of the produced upper and the shoe last (such as, for example, a dimensional error between the produced upper and the shoe last), and a condition (condition for calculating the amount of correction) of the simulation program 1108 is adjusted based on the verification data. As a result, the simulation program 1108 can calculate, with higher accuracy, the amount of correction that allows the upper to conform to the shape of the shoe last.

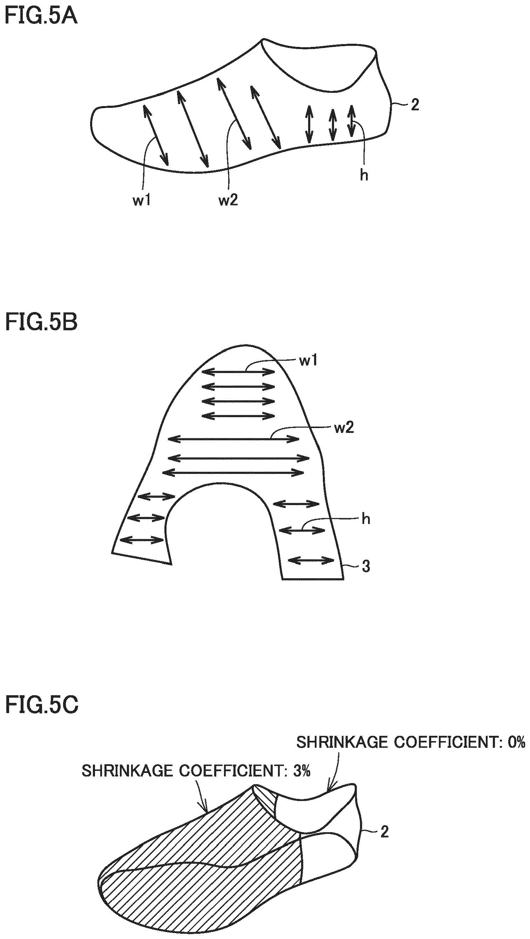

Referring again to Fig. 3, the process performed by the design support apparatus 100 to calculate the amount of correction will be described specifically. The design support apparatus 100 calculates the amount of correction in consideration of the shrinkage direction of the sheet at each position in the three-dimensional shape of the upper (step S106). Fig. 5A shows shrinkage directions when thermoforming is performed in the three-dimensional shape of the upper. As can be seen from Fig. 5A, a portion of the upper corresponding to a toe portion shrinks in a width direction of the shoe, which is indicated by a shrinkage direction w1. A portion of the upper corresponding to an arch portion shrinks in the width direction of the shoe, which is indicated by a shrinkage direction w2. A portion of the upper corresponding to a heel portion shrinks in a height direction of the shoe, which is indicated by a shrinkage direction h. In order to manufacture the shoe having a fitting feeling that satisfies the user, it is necessary to accurately calculate the amount of correction from particularly amounts of shrinkage of the sheet in the shrinkage direction w1 and the shrinkage direction w2.

As shown in Fig. 5B, the design support apparatus 100 specifies the shrinkage directions w1, w2, h and the like on the shape pattern 3 of the upper in association with the positions in the three-dimensional shape of the upper. The design support apparatus 100 simulates the amount of shrinkage of the sheet for each of the shrinkage directions w1, w2 and h specified on the shape pattern 3 of the upper, and accurately calculates the amount of correction.

Furthermore, the design support apparatus 100 modifies the shrinkage coefficient of the sheet for each region of the upper (step S 107). Specifically, as shown in Fig. 5B, the shape pattern 3 of the upper has different sheet areas depending on the positions, and thus, the amount of shrinkage in the portion of the upper corresponding to the heel portion is smaller than that in the portions of the upper corresponding to the toe portion and the arch portion. Therefore, as shown in Fig. 5C, the shrinkage coefficient in the portions of the upper corresponding to the toe portion and the arch portion is set at 3%, and the shrinkage coefficient in the portion of the upper corresponding to the heel portion is set at 0%. Using the shrinkage coefficient of the sheet set for each region of the upper as shown in Fig. 5C, the design support apparatus 100 modifies the amount of correction calculated in step S106. As a result, the design support apparatus 100 can calculate the optimum amount of correction of the shape pattern 3 for each region of the upper.

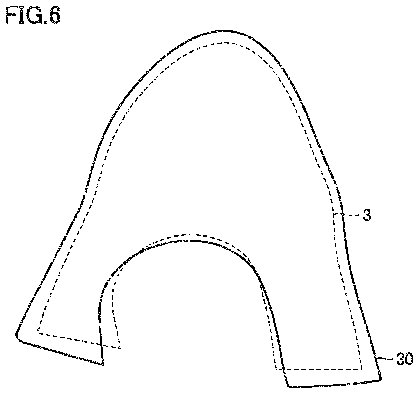

The design support apparatus 100 determines whether or not the design support apparatus 100 has calculated the amounts of correction at all positions of the upper (step S108). When the design support apparatus 100 has not calculated the amounts of correction at all positions of the upper (NO in step S108), the design support apparatus 100 performs the processing in steps S106 and S107 at a position of the upper where the amount of correction has not yet been calculated. When the design support apparatus 100 has calculated the amounts of correction at all positions of the upper (YES in step S108), the design support apparatus 100 determines whether or not the design support apparatus 100 has received adoption information of the user that adopts the completed cutting pattern 30 (step S109). Specifically, when the design support apparatus 100 has calculated the amounts of correction at all positions of the upper, the design support apparatus 100 incorporates the calculated amounts of correction into the shape pattern 3 of the upper to thereby calculate the cutting pattern 30 of the sheet, and causes a display (corresponding to the output unit 108) to display the cutting pattern 30 of the sheet. Fig. 6 is a plan view showing one example of the amount of correction of the cutting pattern of the sheet. As shown in Fig. 6, the design support apparatus 100 causes the display to display the cutting pattern 30 of the sheet (solid line) overlaid on the shape pattern 3 of the upper (broken line) such that the amount of correction for each position of the upper can be seen. As a result, the user can easily understand at which position of the upper a large correction is made.

The user checks the display of the cutting pattern 30 of the sheet shown in Fig. 6, and inputs the adoption information through the input unit 106 such as a keyboard when the user adopts the cutting pattern 30. When the design support apparatus 100 has not received the adoption information of the user (NO in step S109), the design support apparatus 100 returns the process to step S106, and changes the condition and the like and again calculates the amount of correction. In contrast, when the design support apparatus 100 has received the adoption information of the user (YES in step S109), the design support apparatus 100 outputs the cutting pattern 30 of the sheet to the cutting apparatus 400 (step S110). When the cutting apparatus 400 receives the cutting pattern 30 of the sheet from the design support apparatus 100, the cutting apparatus 400 cuts the heat-shrinkable sheet in accordance with the cutting pattern 30.

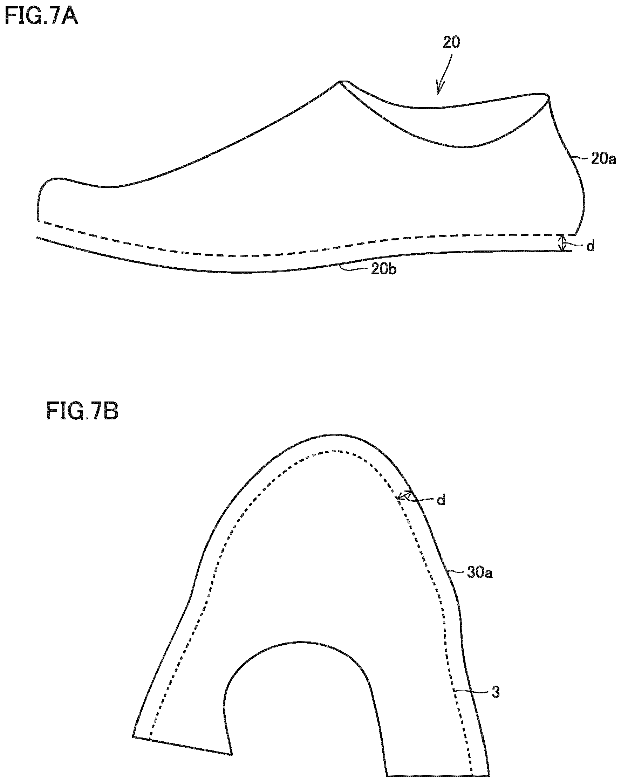

The processing to calculate the amount of correction in consideration of the shrinkage direction and the shrinkage coefficient of the sheet described in steps S 106 and S 107 is merely one example and the design support apparatus 100 may calculate the amount of correction with consideration also given to other processes or conditions. Since a thickness of the sheet varies depending on the material of the upper, the design support apparatus 100 calculates the amount of correction in consideration of the thickness of the sheet. Fig. 7A is a side view of the upper showing one example of an amount of correction in consideration of the thickness of the sheet. Fig. 7B is a plan view of the upper showing one example of the amount of correction in consideration of the thickness of the sheet. As shown in Fig. 7A, an upper 20 is produced by sewing a main body portion 20a located on the upper side of the upper 20 and a bottom surface portion 20b continuous to a lower end of the main body portion 20a. Therefore, a width d serving as a sewing portion needs to be provided between the main body portion 20a and the bottom surface portion 20b, and width d changes depending on the thickness of the sheet. The design support apparatus 100 needs to correct the cutting pattern 30 of the sheet in order to provide the sewing portion (width d). Therefore, as shown in Fig. 7B, the design support apparatus 100 adds an amount of correction corresponding to width d (sewing portion) to an outer perimeter of the shape pattern 3 of the upper, to thereby calculate the cutting pattern 30a of the sheet.

Furthermore, for example, the upper 20 is produced by sewing the main body portion 20a and the bottom surface portion 20b, and overlaying the main body portion 20a and the bottom surface portion 20b on the shoe last and performing thermoforming. Therefore, the shrinkage direction and the shrinkage coefficient of the sheet in the main body portion 20a are restricted by sewing to the bottom surface portion 20b. That is, when the main body portion 20a and the bottom surface portion 20b are strongly sewed, the shrinkage direction and the shrinkage coefficient of the sheet in the main body portion 20a are strongly constrained by the shape (outer perimeter length) of the bottom surface portion 20b. In contrast, when the main body portion 20a and the bottom surface portion 20b are weakly sewed, the shrinkage direction and the shrinkage coefficient of the sheet in the main body portion 20a are weakly constrained by the shape (outer perimeter length) of the bottom surface portion 20b.

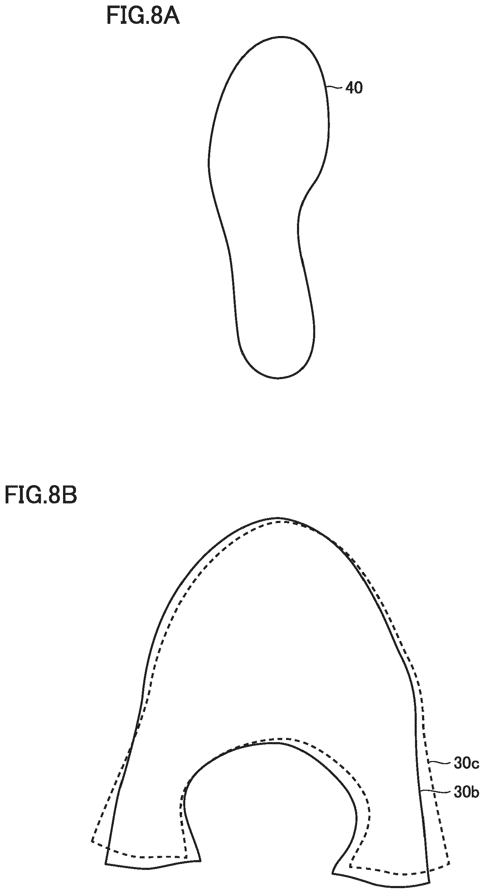

Therefore, the design support apparatus 100 may calculate the amount of correction in consideration of how strongly an outer perimeter length of the main body portion 20a is constrained by the outer perimeter length of the bottom surface portion 20b, based on the strength of sewing of the main body portion 20a and the bottom surface portion 20b. Fig. 8A is a plan view showing a cutting pattern 40 of the bottom surface portion. Fig. 8B is a diagram of the cutting pattern showing one example of an amount of correction in consideration of the outer perimeter length of the bottom surface portion of the upper. The design support apparatus 100 corrects a cutting pattern of the main body portion based on how strongly the cutting pattern of the main body portion is constrained by the outer perimeter length of the cutting pattern 40 of the bottom surface portion. Fig. 8B shows a cutting pattern 30b of the main body portion (solid line) when the cutting pattern 30b of the main body portion is strongly constrained by the outer perimeter length of the cutting pattern 40 of the bottom surface portion, and a cutting pattern 30c of the main body portion (broken line) when the cutting pattern 30c of the main body portion is weakly constrained by the outer perimeter length of the cutting pattern 40 of the bottom surface portion.

### (Heat-Shrinkable Material)

A configuration of a heat-shrinkable sheet (heat-shrinkable material) whose cutting pattern needs to be calculated by the design support apparatus 100 in view of the amount of correction in consideration of the shrinkage direction and the shrinkage coefficient of the sheet will be described in detail below.

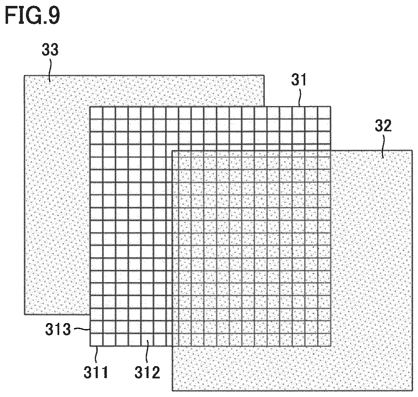

Fig. 9 is a schematic view showing one example of a heat-shrinkable sheet in which a first layer made of woven fabric is sandwiched between second and third layers made of nonwoven fabric. As shown in Fig. 9, the heat-shrinkable sheet includes a sheet-shaped first layer 31 and a sheet-shaped second layer 32 stacked on the first layer 31.

The first layer 31 contains heat-shrinkable threads 311. The first layer 31 is made of knitted fabric or woven fabric having inner gaps 312. Although a way of knitting the knitted fabric is not particularly limited, Russell knitting or tricot knitting can, for example, be used. Although a way of weaving the woven fabric is not particularly limited, plain weaving or twill weaving can, for example, be used.

The second layer 32 is made of nonwoven fabric. Nonwoven fabric containing polyester fibers can, for example, be used. Since the fibers of the nonwoven fabric of the second layer 32 are entangled with each other, the nonwoven fabric of the second layer 32 does not have any inner gaps corresponding to the inner gaps 312 of the first layer 31.

In the upper, the first layer 31 is arranged inside the second layer 32 (on the side close to a foot of a wearer when worn). That is, the first layer 31 corresponds to an inner layer, and the second layer 32 corresponds to an outer layer.

"Inner gaps" described above refer to spaces that exist between fibers such as threads that form knitted fabric or woven fabric, or between fiber aggregates. Generally, when fibers are arranged to extend in a plane direction in knitted fabric or woven fabric, "inner gaps" refer to spaces penetrating in a normal direction of the plane, or spaces divided in the plane direction. When a distance between adjacent fiber intersections is maintained, "inner gaps" refer to spaces surrounded by a plurality of fiber intersections. When fusible threads are used as described below, fiber intersections enter a fixed state and intersecting fibers (threads) are fixed, after the fibers are fused by thermoforming of the upper before forming the upper. "Inner gaps" described above correspond to, for example, mesh openings (refer to the inner gaps 312 formed by the wefts (threads 311) and warps (threads 313) in the woven fabric of the first layer 31 shown as the middle layer of the overlapping three layers in Fig. 9) or a cloth opening portion. In the present embodiment, a distance between adjacent fiber intersections is set at 1 to 5 mm. Alternatively, a ratio of spaces in the plane direction to the knitted fabric or the woven fabric is set at 15 to 30%. The above-described two conditions can be set such that one of these two conditions is satisfied.

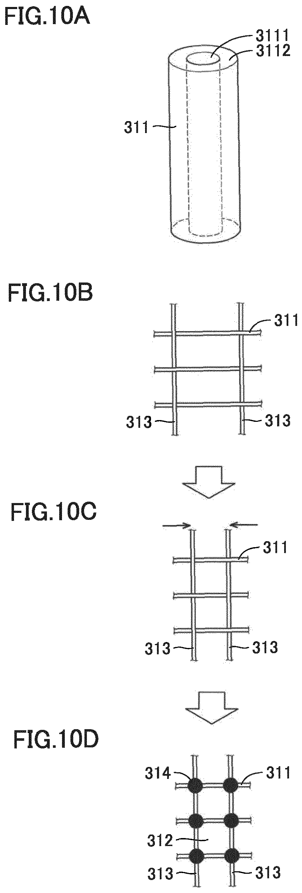

Since the first layer 31 includes the inner gaps 312, the spaces of the inner gaps 312 permit deformation (shrinkage) of the heat-shrinkable threads 311 and movement of the intersecting threads 313 (see Fig. 10B) caused by the deformation. Therefore, the spaces of the inner gaps 312 do not inhibit deformation of the first layer 31 caused by the heat-shrinkable threads 311. Therefore, the first layer 31 can be deformed as designed, and thus, setting of conditions for heat shrinkage (such as the heating temperature and the heating time) is easy.

Fig. 10A is a perspective view schematically showing a configuration of the threads made of a core sheath material. Fig. 10B shows an initial state of the woven fabric. Fig. 10C schematically shows a state in which the wefts have shrunk. Fig. 10D schematically shows a state in which the warps and the wefts have been welded to each other. As schematically shown in Fig. 10A, the heat-shrinkable threads 311 contained in the first layer 31 can be made of a core sheath material including a core 3111 (inner circumferential portion) and a sheath 3112 (outer circumferential portion) that are integrally formed. The threads 311 are fusible threads that are fused by heat, and a melting point of the core 3111 is different from a melting point of the sheath 3112. In the threads 311, the melting point of sheath 3112 is lower than the melting point of the core 3111. Therefore, by heating the upper before forming the upper, the threads 311 as a whole shrink and only the sheaths 3112 are melted. Thus, the shape-retaining function by the sheaths 3112 and the elastic function by the cores 3111 are compatible with each other. A sheath core material made of threads containing polyester resin, and more specifically a sheath core material made of polyester-based thermoplastic elastomer, a sheath core material including the core 3111 made of polyester-based thermoplastic elastomer and the sheath 3112 made of polyamide-based thermoplastic elastomer, or the like can, for example, be used as the heat-shrinkable threads 311.

The first layer 31 can also be made of woven fabric in which one of warps and wefts are the heat-shrinkable threads 311, or knitted fabric in which the heat-shrinkable threads 311 account for 10% or more. When the first layer 31 is made of the woven fabric, the heat-shrinkable threads 311 (the warps or the wefts) are arranged along a width direction of the upper. It is technically common to use the heat-shrinkable threads 311 as wefts. Therefore, Fig. 10B shows a configuration of the woven fabric of the first layer 31 when the heat-shrinkable threads 311 are used as wefts. According to this configuration, when the first layer 31 is heated, the threads 311 shrink in a length direction as shown in Fig. 10C (the shrinkage in the direction shown by an arrow causes a small change in spacing between the adjacent warps (thread 313, thread 313)). Then, the sheaths 3112 of the threads 311 made of the core sheath material are melted and fixed to the threads 313 (fixed portions 314 indicated by black circles in Fig. 10D). The first layer 31 is deformed in this way. Since the deformation is used to form the upper into a desired shape, the upper can be appropriately formed so as to conform to the shape of the shoe last.

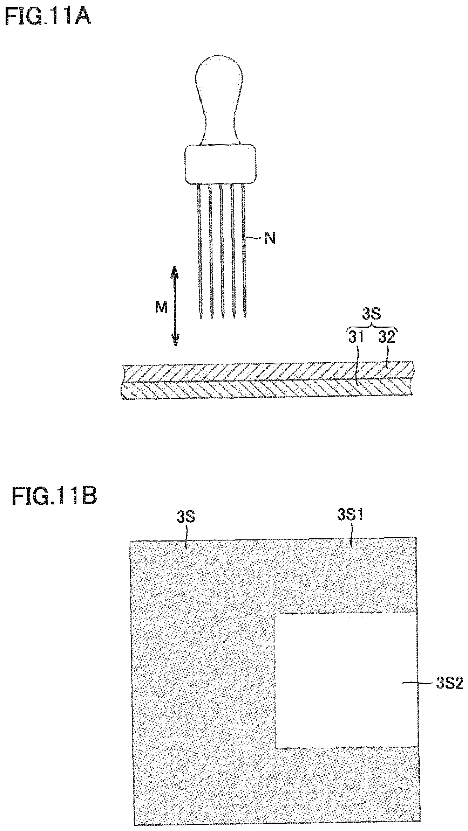

Next, Fig. 11A shows an overview of needle punching. Fig. 11B is a plan view showing a fiber sheet including a needle-punched portion, and a gap forming portion that is not subjected to needle punching. The first layer 31 and the second layer 32 are subjected to needle punching, to thereby form an integrated fiber sheet 3S. The needle punching is processing to reciprocate a needle apparatus having many needles N in a shown direction M in a state where the first and second layers 31 and 32 having a two-layer structure overlap each other, and cause many needles to repeatedly penetrate the overlapping first and second layers 31 and 32, as shown in Fig. 11A. Since the first layer 31 and the second layer 32 that are separate layers are integrated into the fiber sheet 3S as described above, a degree of freedom in design of the fiber sheet 3S is enhanced by selecting a combination of colors of the first layer 31 and the second layer 32, a position where needle punching is performed, and the like. For example, the fiber sheet 3S is sheet-shaped or bag-shaped, prior to sewing for obtaining the shape of the upper before forming is performed.

As shown in Fig. 11B, the fiber sheet 3S can include a needle-punched portion 3S1, and a gap forming portion 3S2 (portion shown by the two-dot chain line) that is not subjected to needle punching. Since the first layer 31 and the second layer 32 are not integrated in the gap forming portion 3S2, a gap (space) can be formed between the first layer 31 and the second layer 32. A cushion member (threads, cotton or foamed member) or a reinforcing member can be inserted into the gap (space) of the gap forming portion 3S2. The cushion member is inserted at, for example, positions of a wearing opening and a shoe tongue. The reinforcing member is inserted at, for example, positions of an eyelet portion, a toe portion and a heel portion. This can provide desirable properties to the gap forming portion 3S2. However, it is also possible to insert nothing into the gap forming portion 3S2. Depending on properties of the member inserted into the gap forming portion 3S2, the fiber sheet 3S can have the properties. Depending on the member inserted into the gap forming portion 3S2, an amount of heat shrinkage when the fiber sheet 3S is heated can be adjusted.

As shown in Fig. 9, the fiber sheet 3S can also have a three-layer structure in which a third layer 33 made of nonwoven fabric is further arranged inside the first layer 31. As to the third layer 33 in this case as well, the first layer 31 is subjected to needle punching, to thereby integrate the first layer 31, the second layer 32 and the third layer 33. The third layer 33 is provided as described above, and thus, desirable properties can be provided to the manufactured shoe by setting a material and a thickness of the third layer 33. The third layer 33 can be provided entirely or partially on the first layer 31. When the third layer 33 is provided partially, the third layer 33 can be used, for example, to reinforce a perimeter edge portion of a wearing opening that the wearer's foot goes in and out, or to reinforce a portion that forms an eyelet.

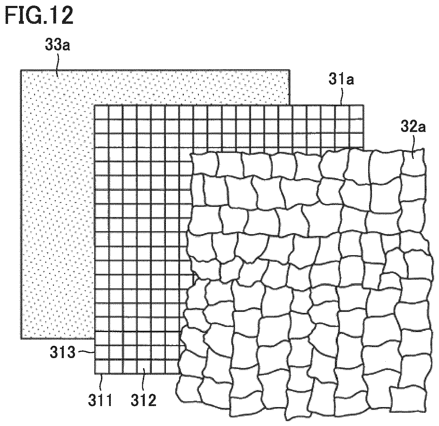

Fig. 12 is a schematic view showing another example of a heat-shrinkable sheet in which a base sheet made of woven fabric is sandwiched between an aggregate of a plurality of chip members made of nonwoven fabric and one sheet of nonwoven fabric. As shown in Fig. 12, the heat-shrinkable sheet includes a sheet-shaped base sheet 31a, and an aggregate of a plurality of sheet-shaped chip members 32a ... 32a stacked on the base sheet 31a.

Similarly to the first layer 31 shown in Fig. 9, the base sheet 31a contains the heat-shrinkable threads 311. The base sheet 31a is made of knitted fabric or woven fabric having inner gaps 312. Although a way of knitting the knitted fabric is not particularly limited, Russell knitting or tricot knitting can, for example, be used. Although a way of weaving the woven fabric is not particularly limited, plain weaving or twill weaving can, for example, be used.

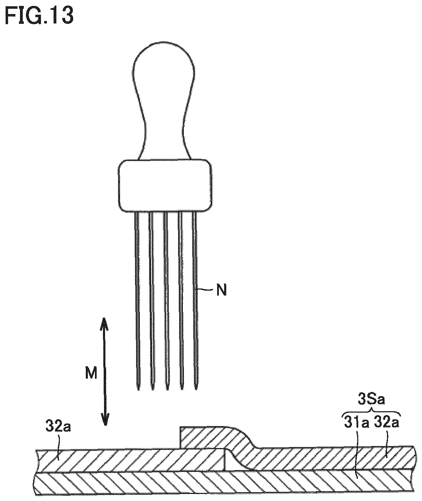

Next, Fig. 13 shows an overview of needle punching. The base sheet 31a and the plurality of chip members 32a ... 32a are subjected to needle punching, to thereby form an integrated fiber sheet 3Sa. The needle punching is processing to reciprocate a needle apparatus having many needles N in a shown direction M in a state where a layer composed of the base sheet 31a and a layer composed of the aggregate of the plurality of chip members 32a ... 32a overlap each other, and cause many needles to repeatedly penetrate the overlapping two layers, as shown in Fig. 13. A material combination of the base sheet 31a and the plurality of chip members 32a ... 32a that form the fiber sheet 3Sa may be any of a combination of knitted fabric and nonwoven fabric, a combination of woven fabric and nonwoven fabric, a combination of knitted fabric and woven fabric, and a combination of woven fabric and knitted fabric. By using the plurality of chip members 32a ... 32a and joining different chip members 32a to the respective portions of the base sheet 31a, different properties (e.g., mechanical properties, and properties related to appearance features (such as contour shape, color, pattern, and texture)) can be provided to the respective portions of the upper. Since the layer composed of the base sheet 31a and the layer composed of the aggregate of the plurality of chip members 32a ... 32a are integrated into the fiber sheet 3Sa, the joining strength of the base sheet 31a and the plurality of chip members 32a ... 32a can be increased. In addition, a degree of freedom in design of the fiber sheet 3Sa is enhanced by selecting a combination of colors of the base sheet 31a and the plurality of chip members 32a ... 32a, a position where needle punching is performed, and the like. For example, the fiber sheet 3Sa is sheet-shaped (planar) or bag-shaped, prior to sewing for obtaining the shape of the upper before forming is performed.

As shown in Fig. 13, the plurality of chip members 32a ... 32a are joined to the base sheet 31a in a state where the plurality of chip members 32a ... 32a partially overlap each other. Therefore, the plurality of chip members 32a ... 32a are exposed on a surface of the fiber sheet 3Sa and the base sheet 31a itself is not exposed (in the form of the sheet). In addition, since the plurality of chip members 32a ... 32a that partially overlap each other are located as an outermost layer, the great-looking upper can be obtained. In addition, since the plurality of chip members 32a ... 32a overlap each other, the overlapping chip members 32a and 32a are supported by each other, which stabilizes joining of the chip members to the base sheet 31a.

As shown in Fig. 12, the fiber sheet 3Sa can also have a three-layer structure in which a sheet-shaped additional layer 33a made of nonwoven fabric is further arranged inside the base sheet 31a. As to the additional layer 33a in this case as well, the base sheet 31a is subjected to needle punching, to thereby integrate the base sheet 31a, the plurality of chip members 32a ... 32a, and the additional layer 33a. The material of the additional layer 33a is not limited to nonwoven fabric and may be knitted fabric, woven fabric or the like. The additional layer 33a may also be made of the plurality of chip members 32a ... 32a. In this case, the additional layer 33a can also be formed by combining the chip member 32a made of any of nonwoven fabric, knitted fabric and woven fabric with the chip member 32a made of a material different from that of the just-described chip member 32a. The additional layer 33a is provided as described above, and thus, shoe fit of the wearer of the shoe can be improved. In addition, desirable properties can be provided to the manufactured shoe by setting a material and a thickness of the additional layer 33a. The additional layer 33a can be provided entirely or partially on the base sheet 31a. When the additional layer 33a is provided partially, the additional layer 33a can be used, for example, to reinforce a perimeter edge portion of a wearing opening that the wearer's foot goes in and out, or to reinforce a portion that forms an eyelet.

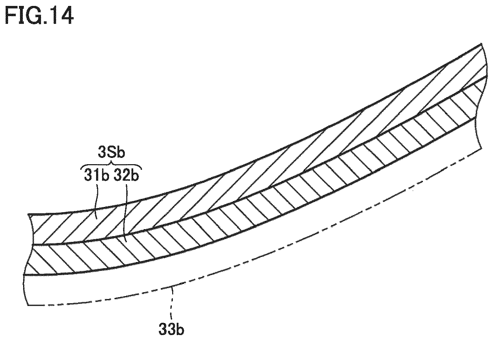

Next, Fig. 14 is a cross-sectional view showing still another example of a heat-shrinkable sheet having a layer structure. As shown in Fig. 14, the heat-shrinkable sheet includes a sheet-shaped first layer 31b, and a sheet-shaped second layer 32b stacked on the first layer 31b. A layer composed of the first layer 31b and a layer composed of the second layer 32b are integrated into a fiber sheet 3Sb. As shown by the two-dot chain line in Fig. 14, the upper can also have a three-layer structure in which a third layer 33b is further arranged inside the second layer 32b. The third layer 33b can be made of knitted fabric like the first layer 31b and the second layer 32b, or can be made of woven fabric. When the third layer 33b is made of woven fabric, plain weaving or twill weaving can, for example, be used although a way of weaving the woven fabric is not particularly limited. It is preferable that the third layer 33b should have an expansion and contraction ratio higher than that of the first layer 31b and the second layer 32b. As one example, the high expansion and contraction property can be provided by using spandex fibers, crimped threads, plain knitting, a neoprene material or the like to produce a cloth.

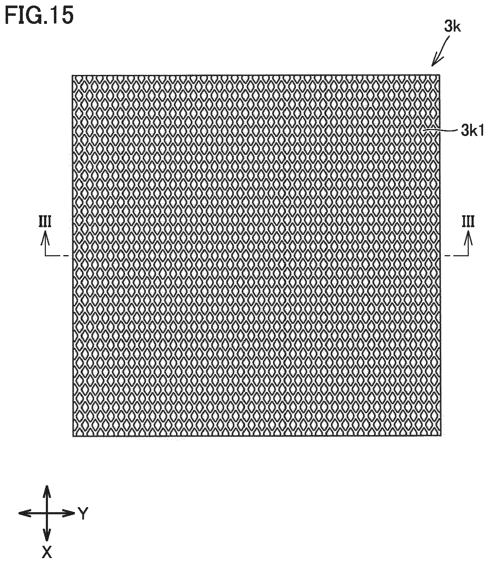

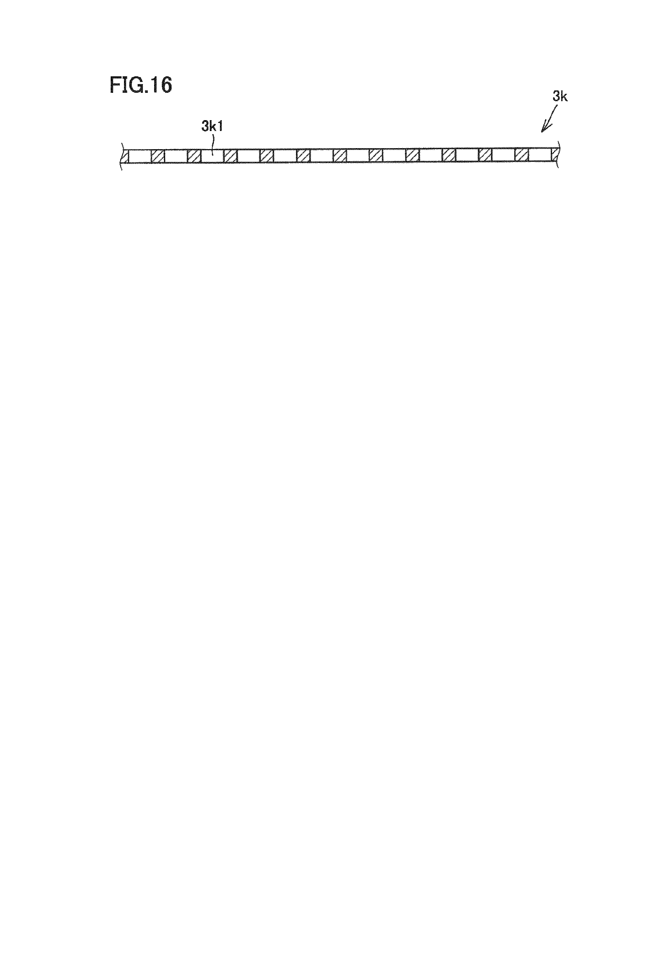

The first layer 3 1b is made of a double Russell cloth. Fig. 15 is a plan view showing one example of a double Russell cloth. Fig. 16 is a partially enlarged cross-sectional view of one example of the double Russell cloth. As shown in Figs. 15 and 16, the first layer 31b is made of knitted fabric 3k formed by knitting threads having prescribed gaps 3k1 that are open in a front surface (outer surface in the state of the upper). The gaps 3k1 refer to spaces that exist between fiber aggregates that form the mesh-like knitted fabric 3k and are made of the threads 311, 313 and the like shown in Figs. 10A to 10D. In addition, the gaps 3k1 refer to spaces penetrating in a normal direction of the plane on which the knitted fabric extends, or spaces in bottomed recessed portions that are open in the above-described normal direction. The gaps 3k1 may in some cases appear such that the mesh openings in the front surface of the knitted fabric 3k have a window-like shape. The shape of the openings is, for example, a circular shape, an oblong shape, an oval shape, or a rounded square or rhombus shape (see Fig. 15).

In contrast, although the second layer 32b can be made of knitted fabric that does not have any gaps, the second layer 32b is preferably made of the knitted fabric 3k having the gaps 3k1, similarly to the first layer 31b. Although a way of knitting the knitted fabric is not particularly limited, Russell knitting or tricot knitting can, for example, be used. The way of knitting the knitted fabric in the present embodiment is double Russell knitting. A shape when the knitted fabric 3k is seen in a flat state in a planar view is shown in Fig. 15. A cross-sectional shape is schematically shown in Fig. 16 and the gaps 3k1 penetrate in a thickness direction. Since at least the first layer 31b is made of the knitted fabric 3k having the gaps 3k1, air permeability and flexibility can be provided to the upper due to the presence of the spaces. In addition, since the gaps 3k1 serve as a shrinkage allowance when the upper is formed by heating, the shrinkage allowance is guaranteed before the upper is formed. The first layer 31b containing the heat-shrinkable threads 311 is provided as described above, and thus, the first layer 31b containing threads 311 and threads 313 deforms easily when the upper is formed by heating, which makes it easier for the upper to conform to the shape of the shoe last.

As described above, the design support apparatus 100 according to the embodiment is an apparatus that designs a cutting pattern of a heat-shrinkable sheet when cutting the sheet and producing an upper. The design support apparatus 100 includes: an input unit 106 that receives shoe last data 1; a processor (computing unit) 102 that computes the cutting pattern 30 of the sheet based on the shoe last data 1 received by the input unit 106; and an output unit 108 that outputs the cutting pattern 30 of the sheet computed by the processor 102. The processor 102 calculates an amount of correction in consideration of a shrinkage direction and a shrinkage coefficient of the sheet, and calculates the cutting pattern 30 of the sheet by developing, on a plane, three-dimensional shape data 2 that conforms to a dimension of the shoe last data 1, to thereby obtain a shape pattern 3 of the upper, and incorporating the calculated amount of correction into the shape pattern 3 of the upper.

Thus, the design support apparatus 100 according to the embodiment calculates the cutting pattern 30 of the sheet in view of the amount of correction in consideration of the shrinkage direction and the shrinkage coefficient of the sheet. Therefore, the design support apparatus 100 according to the embodiment can design the cutting pattern 30 of the sheet that allows the upper to conform to the shape of the shoe last when thermoforming is performed.

Preferably, the processor 102 calculates the amount of correction for each position of the upper. Thus, as compared with the amount of correction determined uniformly based on the shrinkage direction and the shrinkage coefficient of the sheet, the design support apparatus 100 can design the cutting pattern 30 of the sheet that allows the upper to further conform to the shape of the shoe last.

Preferably, the processor 102 calculates the amount of correction in consideration of a shrinkage direction of the sheet at a position in a three-dimensional shape of the upper. Thus, the design support apparatus 100 can make a correction so as to further conform to the shape of the shoe.

Preferably, the processor 102 calculates the amount of correction in consideration of a shrinkage coefficient of the sheet preset for each region of the upper. Thus, the design support apparatus 100 can set the optimum shrinkage coefficient for each region of the upper, and design the cutting pattern 30 of the sheet that allows the upper to further conform to the shape of the shoe last.

The processor 102 calculates the amount of correction in consideration of a thickness of the sheet. Thus, the design support apparatus 100 can design the cutting pattern 30 of the sheet in consideration of the portion required for sewing to the bottom surface portion 20b.

Preferably, the upper includes a main body portion 20a located on an upper side, and a bottom surface portion 20b continuous to a lower end of the main body portion 20a, and the processor 102 calculates the amount of correction in consideration of an outer perimeter length of the bottom surface portion 20b. Thus, the design support apparatus 100 can design the cutting pattern 30 of the sheet in consideration of whether the main body portion 20a and the bottom surface portion 20b are strongly or weakly sewed.

Preferably, the input unit 106 further receives verification data of the produced upper and shoe last, and the processor 102 adjusts a condition for calculating the amount of correction based on the verification data. Thus, the design support apparatus 100 can calculate, with higher accuracy, the amount of correction that allows the upper to conform to the shape of the shoe last.

Preferably, the sheet includes: a first layer containing heat-shrinkable threads and made of knitted fabric or woven fabric having inner gaps; and a second layer stacked on the first layer and made of nonwoven fabric, and the sheet is a fiber sheet formed by integrating the first layer and the second layer by needle punching.

Preferably, the sheet is a fiber sheet formed by joining, in an overlapping manner, a base sheet containing heat-shrinkable threads and a plurality of chip members each having an area smaller than that of the base sheet.

Preferably, the sheet includes: a first layer made of knitted fabric; and a second layer arranged inside the first layer and made of the knitted fabric, at least one of the first layer or the second layer contains first threads and second threads as threads that form the knitted fabric, the first threads are heat-shrinkable, a melting point of the second threads is higher than that of the first threads, and a heat shrinkage coefficient of at least one of the first layer or the second layer containing the first threads and the second threads is higher in a width direction than in a front-back direction of the upper.

The design method according to the embodiment is a method for designing a cutting pattern of a heat-shrinkable sheet when cutting the sheet and producing an upper. The design method includes: receiving shoe last data 1; computing the cutting pattern 30 of the sheet based on the received shoe last data 1; and outputting the computed cutting pattern 30 of the sheet. The computing includes: calculating an amount of correction in consideration of a shrinkage direction and a shrinkage coefficient of the sheet; and calculating the cutting pattern 30 of the sheet by developing, on a plane, three-dimensional shape data 2 that conforms to a dimension of the shoe last data 1, to thereby obtain a shape pattern 3 of the upper, and incorporating the calculated amount of correction into the shape pattern 3 of the upper.

Thus, the design method according to the embodiment calculates the cutting pattern 30 of the sheet in view of the amount of correction in consideration of the shrinkage direction and the shrinkage coefficient of the sheet. Therefore, the design method according to the embodiment can design the cutting pattern 30 of the sheet that allows the upper to conform to the shape of the shoe last when thermoforming is performed.

The upper producing system 10 according to the embodiment is a system that cuts a heat-shrinkable sheet and produces an upper. The upper producing system 10 includes: a design support apparatus 100 that designs a cutting pattern of the sheet; and a cutting apparatus 400 that cuts the sheet based on the cutting pattern of the sheet designed by the design support apparatus 100. The design support apparatus 100 includes: an input unit 106 that receives shoe last data 1; a processor 102 that computes the cutting pattern of the sheet based on the shoe last data 1 received by the input unit 106; and an output unit 108 that outputs the cutting pattern of the sheet computed by the processor 102. The processor 102 calculates an amount of correction in consideration of a shrinkage direction and a shrinkage coefficient of the sheet, and calculates the cutting pattern 30 of the sheet by developing, on a plane, three-dimensional shape data 2 that conforms to a dimension of the shoe last data 1, to thereby obtain a shape pattern 3 of the upper, and incorporating the calculated amount of correction into the shape pattern 3 of the upper.

Thus, the upper producing system 10 according to the embodiment calculates the cutting pattern 30 of the sheet in view of the amount of correction in consideration of the shrinkage direction and the shrinkage coefficient of the sheet. Therefore, the upper producing system 10 according to the embodiment can produce the upper that can conform to the shape of the shoe last when thermoforming is performed.

### <Other Modifications>

The upper producing system 10 at one store including the design support apparatus 100, the measuring apparatus 200 and the cutting apparatus 400 has been described with reference to Fig. 1. However, the upper producing system 10 may include a store where the measuring apparatus 200 is not provided and the mobile terminal 300 such as a smartphone is used to measure a foot shape. The upper producing system 10 may also include a store where the cutting apparatus 400 is not provided and the cutting apparatus 400 placed at another store is used to cut a sheet and produce an upper. Shoe last producing systems at various stores may be connected to a data center where design support of the cutting pattern 30 of the sheet may be performed.

## Claims

1. A design support apparatus (100) that designs a cutting pattern (30) of a heat-shrinkable sheet when cutting the sheet and producing an upper, the design support apparatus (100) comprising:
an input unit (106) that receives shoe last data (1);
a computing unit (102) that computes the cutting pattern (30) of the sheet based on the shoe last data (1) received by the input unit (106); and
an output unit (108) that outputs the cutting pattern (30) of the sheet computed by the computing unit (102), wherein
the computing unit (102) calculates an amount of correction of the cutting pattern in consideration of a shrinkage direction and a shrinkage coefficient of the sheet, and calculates the cutting pattern (30) of the sheet by developing, on a plane, three-dimensional shape data (2) that conforms to a dimension of the shoe last data (1), to thereby obtain a shape pattern (3) of the upper, and incorporating the calculated amount of correction into the shape pattern (3) of the upper, **characterized in that**
the computing unit (102) calculates the amount of correction in consideration of a thickness of the sheet.

2. The design support apparatus (100) according to claim 1, wherein
the computing unit (102) calculates the amount of correction for each position of the upper.

3. The design support apparatus (100) according to claim 2, wherein
the computing unit (102) calculates the amount of correction in consideration of a shrinkage direction of the sheet at a position in a three-dimensional shape of the upper.

4. The design support apparatus (100) according to claim 2 or 3, wherein
the computing unit (102) calculates the amount of correction in consideration of a shrinkage coefficient of the sheet preset for each region of the upper.

5. The design support apparatus (100) according to any one of claims 2 to 4, wherein
the upper (20) includes a main body portion (20a) located on an upper side, and a bottom surface portion (20b) continuous to a lower end of the main body portion (20a), and
the computing unit (102) calculates the amount of correction in consideration of an outer perimeter length of the bottom surface portion (20b).

6. The design support apparatus (100) according to any one of claims 1 to 5, wherein
the input unit (106) further receives verification data of the produced upper and shoe last, and
the computing unit (102) adjusts a condition for calculating the amount of correction based on the verification data.

7. The design support apparatus (100) according to any one of claims 1 to 6, wherein the shrinkage coefficient varies due to the sheet including:
a first layer (31) containing heat-shrinkable threads (311) and made of knitted fabric or woven fabric having inner gaps; and
a second layer (32) stacked on the first layer (31) and made of nonwoven fabric, and
the sheet is a fiber sheet (3S) formed by integrating the first layer (31) and the second layer (32) by needle punching.

8. The design support apparatus (100) according to any one of claims 1 to 6, wherein the shrinkage coefficient varies due to the sheet being a fiber sheet (3Sa) formed by joining, in an overlapping manner, a base sheet (31a) containing heat-shrinkable threads (311) and a plurality of chip members (32a) each having an area smaller than that of the base sheet (31a).

9. The design support apparatus (100) according to any one of claims 1 to 6, wherein the shrinkage coefficient varies due to the sheet including:
a first layer (31b) made of knitted fabric; and
a second layer (32b) arranged inside the first layer (31b) and made of the knitted fabric,
at least one of the first layer (31b) or the second layer (32b) contains first threads and second threads as threads that form the knitted fabric,
the first threads are heat-shrinkable,
a melting point of the second threads is higher than that of the first threads, and
a heat shrinkage coefficient of at least one of the first layer or the second layer containing the first threads and the second threads is higher in a width direction than in a front-back direction of the upper.

10. A design method for designing a cutting pattern (30) of a heat-shrinkable sheet when cutting the sheet and producing an upper, the design method comprising:
receiving shoe last data (1);
computing the cutting pattern (30) of the sheet based on the received shoe last data (1); and
outputting the computed cutting pattern (30) of the sheet, wherein
the computing includes:
calculating an amount of correction of the cutting pattern in consideration of a shrinkage direction and a shrinkage coefficient of the sheet; and
calculating the cutting pattern (30) of the sheet by developing, on a plane, three-dimensional shape data (2) that conforms to a dimension of the shoe last data (1), to thereby obtain a shape pattern (3) of the upper, and incorporating the calculated amount of correction into the shape pattern (3) of the upper, **characterized in that**:
the calculating of the amount of correction is performed in consideration of the thickness of the sheet.

11. An upper producing system that cuts a heat-shrinkable sheet and produces an upper, the upper producing system comprising:
the design support apparatus (100) as recited in any one of claims 1 to 9; and
a cutting apparatus that cuts the sheet based on the cutting pattern (30) of the sheet designed by the design support apparatus (100).

## Patentansprüche

1. Designunterstützungsvorrichtung (100), die ein Schnittmuster (30) eines wärmeschrumpfbaren Blatts designt, wenn das Blatt geschnitten und ein Oberschuh hergestellt wird, wobei die Designunterstützungsvorrichtung (100) Folgendes umfasst:
eine Eingabeeinheit (106), die Schuhleistendaten (1) empfängt;
eine Berechnungseinheit (102), die das Schnittmuster (30) des Blatts basierend auf den durch die Eingabeeinheit (106) empfangenen Schuhleistendaten (1) berechnet; und
eine Ausgabeeinheit (108), die das durch die Berechnungseinheit (102) berechnete Schnittmuster (30) des Blatts ausgibt, wobei
die Berechnungseinheit (102)
einen Korrekturbetrag des Schnittmusters unter Berücksichtigung einer Schrumpfrichtung und eines Schrumpfkoeffizienten des Blatts berechnet, und
das Schnittmuster (30) des Blatts durch Entwickeln, auf einer Ebene, dreidimensionaler Formdaten (2), die einem Maß der Schuhleistendaten (1) entsprechen, um dadurch ein Formmuster (3) des Oberschuhs zu erhalten, und Einbeziehen des berechneten Korrekturbetrags in das Formmuster (3) des Oberschuhs berechnet, **dadurch gekennzeichnet, dass**
die Berechnungseinheit (102) den Korrekturbetrag unter Berücksichtigung einer Dicke des Blatts berechnet.

2. Designunterstützungsvorrichtung (100) nach Anspruch 1, wobei
die Berechnungseinheit (102) den Korrekturbetrag für jede Position des Oberschuhs berechnet.

3. Designunterstützungsvorrichtung (100) nach Anspruch 2, wobei
die Berechnungseinheit (102) den Korrekturbetrag unter Berücksichtigung einer Schrumpfrichtung des Blatts an einer Position in einer dreidimensionalen Form des Oberschuhs berechnet.

4. Designunterstützungsvorrichtung (100) nach Anspruch 2 oder 3, wobei
die Berechnungseinheit (102) den Korrekturbetrag unter Berücksichtigung eines Schrumpfkoeffizienten des Blatts berechnet, der für jeden Bereich des Oberschuhs voreingestellt ist.

5. Designunterstützungsvorrichtung (100) nach einem der Ansprüche 2 bis 4, wobei
der Oberschuh (20) einen Hauptkörperabschnitt (20a), der sich an einer oberen Seite befindet, und einen Unterseitenabschnitt (20b), der sich an ein unteres Ende des Hauptkörperabschnitts (20a) anschließt, einschließt, und
die Berechnungseinheit (102) den Korrekturbetrag unter Berücksichtigung einer Außenumfangslänge des Unterseitenabschnitts (20b) berechnet.

6. Designunterstützungsvorrichtung (100) nach einem der Ansprüche 1 bis 5, wobei
die Eingabeeinheit (106) ferner Verifizierungsdaten des hergestellten Oberschuhs und des hergestellten Schuhleistens empfängt, und
die Berechnungseinheit (102) eine Bedingung zum Berechnen des Korrekturbetrags basierend auf den Verifizierungsdaten anpasst.

7. Designunterstützungsvorrichtung (100) nach einem der Ansprüche 1 bis 6, wobei der Schrumpfkoeffizient aufgrund dessen variiert, dass das Blatt Folgendes einschließt:
eine erste Schicht (31), die wärmeschrumpfbare Fäden (311) enthält und aus Maschenware oder Gewebe mit Innenlücken hergestellt ist; und
eine zweite Schicht (32), die auf die erste Schicht (31) gestapelt und aus Vliesstoff hergestellt ist, und
das Blatt ein Faserstoffblatt (3S) ist, das durch Integrieren der ersten Schicht (31) und der zweiten Schicht (32) mittels Vernadelung gebildet wird.

8. Designunterstützungsvorrichtung (100) nach einem der Ansprüche 1 bis 6, wobei der Schrumpfkoeffizient aufgrund dessen variiert, dass:
das Blatt ein Faserstoffblatt (3Sa) ist, das durch Zusammenfügen, auf eine überlappende Art und Weise, eines Grundblatts (31a), das wärmeschrumpfbare Fäden (311) enthält, und einer Vielzahl von Chipelementen (32a), die jeweils eine kleinere Fläche als die des Grundblatts (31a) aufweisen, gebildet wird.

9. Designunterstützungsvorrichtung (100) nach einem der Ansprüche 1 bis 6, wobei der Schrumpfkoeffizient aufgrund dessen variiert, dass das Blatt Folgendes einschließt:
eine erste Schicht (31b), die aus Maschenware hergestellt ist; und
eine zweite Schicht (32b), die in der ersten Schicht (31b) angeordnet ist und aus der Maschenware hergestellt ist,
mindestens eine der ersten Schicht (31b) oder der zweiten Schicht (32b) enthält erste Fäden und zweite Fäden als Fäden, die die Maschenware bilden,
die ersten Fäden sind wärmeschrumpfbar,
ein Schmelzpunkt der zweiten Fäden ist höher als der der ersten Fäden, und
ein Wärmeschrumpfkoeffizient von mindestens einer der ersten Schicht oder der zweiten Schicht, die die ersten Fäden und die zweiten Fäden enthält, ist in einer Breitenrichtung höher als in einer Vorne-Hinten-Richtung des Oberschuhs.

10. Designverfahren zum Designen eines Schnittmusters (30) eines wärmeschrumpfbaren Blatts, wenn das Blatt geschnitten und ein Oberschuh hergestellt wird, wobei das Designverfahren umfasst:
Empfangen von Schuhleistendaten (1);
Berechnen des Schnittmusters (30) des Blatts basierend auf den empfangenen Schuhleistendaten (1); und
Ausgeben des berechneten Schnittmusters (30) des Blatts, wobei:
das Berechnen Folgendes einschließt:
Berechnen eines Korrekturbetrags des Schnittmusters unter Berücksichtigung einer Schrumpfrichtung und eines Schrumpfkoeffizienten des Blatts; und
Berechnen des Schnittmusters (30) des Blatts durch Entwickeln, auf einer Ebene, dreidimensionaler Formdaten (2), die einem Maß der Schuhleistendaten (1) entsprechen, um dadurch ein Formmuster (3) des Oberschuhs zu erhalten, und Einbeziehen des berechneten Korrekturbetrags in das Formmuster (3) des Oberschuhs, **dadurch gekennzeichnet, dass**:
das Berechnen des Korrekturbetrags unter Berücksichtigung der Dicke des Blatts durchgeführt wird.

11. Oberschuhherstellungssystem, das ein wärmeschrumpfbares Blatt schneidet und einen Oberschuh herstellt, wobei das Oberschuhherstellungssystem umfasst:
die Designunterstützungsvorrichtung (100) nach einem der Ansprüche 1 bis 9; und
eine Schnittvorrichtung, die das Blatt basierend auf dem durch die Designunterstützungsvorrichtung (100) designten Schnittmuster (30) des Blatts schneidet.

## Revendications

1. Appareil de support de conception (100) qui conçoit un modèle de coupe (30) d'une feuille thermorétractable lors de la coupe de la feuille et de la production d'une tige, l'appareil de support de conception (100) comprenant :
une unité d'entrée (106) qui reçoit des données de forme de chaussure (1) ;
une unité de calcul (102) qui calcule le modèle de coupe (30) de la feuille sur la base des données sur la forme de la chaussure (1) reçues par l'unité d'entrée (106) ; et
une unité de sortie (108) qui émet le modèle de coupe (30) de la feuille calculé par l'unité de calcul (102), dans lequel :
l'unité de calcul (102)
calcule une quantité de correction du modèle de coupe compte tenu d'une direction de rétrécissement et d'un coefficient de rétrécissement de la feuille ; et
calcule le modèle de coupe (30) de la feuille en développant, sur un plan, des données de forme tridimensionnelles (2) qui se conforment à une dimension des données sur la forme de la chaussure (1), pour obtenir ainsi un modèle de forme (3) de la tige, et incorporant la quantité calculée de correction dans le modèle de forme (3) de la tige, **caractérisé en ce que** :
l'unité de calcul (102) calcule la quantité de correction compte tenu d'une épaisseur de la feuille.

2. Appareil de support de conception (100) selon la revendication 1, dans lequel :
l'unité de calcul (102) calcule la quantité de correction pour chaque position de la tige.

3. Appareil de support de conception (100) selon la revendication 2, dans lequel :
l'unité de calcul (102) calcule la quantité de correction compte tenu d'une direction de rétrécissement de la feuille au niveau d'une position dans une forme tridimensionnelle de la tige.

4. Appareil de support de conception (100) selon la revendication 2 ou 3, dans lequel
l'unité de calcul (102) calcule la quantité de correction compte tenu d'un coefficient de rétrécissement de la feuille prédéfini pour chaque région de la tige.

5. Appareil de support de conception (100) selon l'une quelconque des revendications 2 à 4, dans lequel :
la tige (20) inclut une partie de corps principal (20a) disposée sur un côté supérieur, et une partie de surface inférieure (20b) continue jusqu'à une extrémité inférieure de la partie de corps principal (20a) ; et
l'unité de calcul (102) calcule la quantité de correction compte tenu d'une longueur d'un périmètre extérieur de la partie de surface inférieure (20b).

6. Appareil de support de conception (100) selon l'une quelconque des revendications 1 à 5, dans lequel :
l'unité d'entrée (106) reçoit en outre des données de vérification de la tige et de la forme de chaussure produites ; et
l'unité de calcul (102) ajuste une condition pour calculer la quantité de correction sur la base des données de vérification.

7. Appareil de support de conception (100) selon l'une quelconque des revendications 1 à 6, dans lequel le coefficient de rétrécissement varie selon que la feuille inclut :
une première couche (31) contenant des fils thermorétractables (311) et composée de tissu tricoté ou de tissu tissé comportant des espaces internes ; et
une deuxième couche (32) empilée sur la première couche (31) et composée de tissu non tissé ; et
la feuille est une feuille de fibres (3 S) formée en intégrant la première couche (31) et la deuxième couche (32) par aiguilletage.

8. Appareil de support de conception (100) selon l'une quelconque des revendications 1 à 6, dans lequel le coefficient de rétrécissement varie selon que :
la feuille est une feuille fibreuse (3Sa) formée en reliant, d'une manière chevauchante, une feuille de base (31a) contenant des fils thermorétractables (311) et une pluralité d'éléments de puce (32a) ayant chacun une surface inférieure à celle de la feuille de base (31a).

9. Appareil de support de conception (100) selon l'une quelconque des revendications 1 à 6, dans lequel le coefficient de rétrécissement varie selon que la feuille inclut :
une première couche (31b) composée de tissu tricoté ; et
une deuxième couche (32b) agencée à l'intérieur de la première couche (31b) et composée du tissu tricoté ;
au moins une de la première couche (31b) ou de la deuxième couche (32b) contient des premiers fils et des deuxièmes fils en tant que fils formant le tissu tricoté ;
les premiers fils sont thermorétractables ;
un point de fusion des deuxièmes fils est supérieur à celui des premiers fils ; et
un coefficient de rétrécissement d'au moins une de la première couche ou de la deuxième couche contenant les premiers fils et les deuxièmes fils est supérieur dans une direction de la largeur à celui dans une direction allant de l'avant vers l'arrière de la tige.

10. Procédé de conception pour concevoir un modèle de coupe (30) d'une feuille thermorétractable lors de la coupe de la feuille et de la production d'une tige, le procédé de conception comprenant :
la réception de données sur la forme de la chaussure (1) ;
le calcul du modèle de coupe (30) de la feuille sur la base des données sur la forme de la chaussure reçues (1) ; et
l'émission du modèle de coupe calculé (30) de la feuille ; dans lequel :
le calcul inclut:
le calcul d'une quantité de correction du modèle de coupe compte tenu d'une direction de rétrécissement et d'un coefficient de rétrécissement de la feuille ; et
le calcul du modèle de coupe (30) de la feuille en développant, sur un plan, des données de forme tridimensionnelles (2) qui se conforment à une dimension des données de la forme de la chaussure (1), pour obtenir ainsi un modèle de forme (3) de la tige, et incorporant la quantité calculée de correction dans le modèle de forme (3) de la tige, **caractérisé en ce que** :
le calcul de la quantité de correction est effectué compte tenu de l'épaisseur de la feuille.

11. Système de production d'une tige, qui coupe une feuille themorétractable et produit une tige, le système de production de la tige comprenant :
l'appareil de support de conception (100) selon l'une quelconque des revendications 1 à 9 ; et
l'appareil de coupe qui coupe la feuille sur la base du modèle de coupe (30) de la feuille conçu par l'appareil de support de conception (100).
